# EUROPEAN PATENT APPLICATION

(11) **EP 4 213 592 A1**
(43) Date of publication of application: **19.07.2023**
(21) Application number: 20953292.8
(22) Date of filing: 11.09.2020
(51) Int. Cl.: H05B 6/12

(54) **HEAT COOKER AND HEAT COOKER SYSTEM**

(71) Applicant: MITSUBISHI ELECTRIC CORPORATION, Chiyoda-ku Tokyo 100-8310 (JP)
(72) Inventor: BUNYA, Jun, Tokyo 100-8310 (JP); TAKESHITA, Miyuki, Tokyo 100-8310 (JP)
(74) Representative: Pfenning, Meinig & Partner mbB
(86) International application number: PCT/JP2020/034477
(87) International publication number: WO 2022/054227

(57) **Abstract**

A heating cooking apparatus has a top plate that has a heating zone that is an area on which a heating target is to be placed, a heating coil located under the heating zone, an electricity-recovery coil configured to recover a leakage magnetic flux that leaks from the heating coil and to generate electricity, a storage battery configured to store the electricity generated by the electricity-recovery coil, a first driving circuit configured to receive electricity supplied by a commercial electricity source and to supply high-frequency current to the heating coil, a second driving circuit configured to receive electricity supplied by the storage battery and to supply high-frequency current to the heating coil, and a controller configured to operate in an induction heating mode to inductively heat the heating target placed on the heating zone by the heating coil supplied with high-frequency current from the first driving circuit, and to operate in a power supply mode to supply power to a power receiver placed on the heating zone by the heating coil supplied with high-frequency current from the second driving circuit.

## Description

### Technical Field

The present disclosure relates to a heating cooking apparatus and to a heating-cooking-apparatus system that each inductively heat a heating target.

### Background Art

There has been proposed a heating cooking apparatus that includes a heating coil configured to inductively heat a heating target and a leakage-magnetic-flux recovery coil disposed at such a position as to interlink with a magnetic flux generated in the heating coil, and uses electricity obtained by converting an electric current flowing in the leakage-magnetic-flux recovery coil (see Patent Literature 1, for example).

### Citation List

### Patent Literature

Patent Literature 1: Japanese Unexamined Patent Application Publication No. 2014-186843

### Summary of Invention

### Technical Problem

In the heating cooking apparatus described in Patent Literature 1, the electricity obtained from the current flowing in the leakage-magnetic-flux recovery coil is used as driving electricity for a driving circuit that supplies high-frequency current to the heating coil. Because such utilization of a leakage magnetic flux, which has not been used, as electricity is effective in achieving energy saving, development of a heating cooking apparatus capable of further utilizing electricity generated by recovering a leakage magnetic flux is expected.

The present disclosure is developed to respond to the expectation and provides a heating cooking apparatus and a heating-cooking-apparatus system capable of utilizing electricity generated by recovering a leakage magnetic flux leaking from a heating coil. Solution to Problem

A heating cooking apparatus according to an embodiment of the present disclosure has a top plate that has a heating zone that is an area on which a heating target is to be placed, a heating coil located under the heating zone, an electricity-recovery coil configured to recover a leakage magnetic flux that leaks from the heating coil and to generate electricity, a storage battery configured to store the electricity generated by the electricity-recovery coil, a first driving circuit configured to receive electricity supplied by a commercial electricity source and to supply high-frequency current to the heating coil, a second driving circuit configured to receive electricity supplied by the storage battery and to supply high-frequency current to the heating coil, and a controller configured to operate in an induction heating mode to inductively heat the heating target placed on the heating zone by the heating coil supplied with high-frequency current from the first driving circuit, and to operate in a power supply mode to supply power to a power receiver placed on the heating zone by the heating coil supplied with high-frequency current from the second driving circuit.

A heating-cooking-apparatus system according to another embodiment of the present disclosure has a heating cooking apparatus having a top plate that has a heating zone that is an area on which a heating target is to be placed, a heating coil located under the heating zone, a casing that stores the heating coil, and an electricity-recovery coil configured to recover a leakage magnetic flux that leaks from the heating coil and to generate electricity, and a storage battery disposed outside the casing and configured to store the electricity generated by the electricity-recovery coil. The heating cooking apparatus further has a first driving circuit configured to receive electricity supplied by a commercial electricity source and to supply high-frequency current to the heating coil, a second driving circuit configured to receive electricity supplied by the storage battery and to supply high-frequency current to the heating coil, and a controller configured to operate in an induction heating mode to inductively heat the heating target placed on the heating zone by the heating coil supplied with high-frequency current from the first driving circuit, and to operate in a power supply mode to supply power to a power receiver placed on the heating zone by the heating coil supplied with high-frequency current from the second driving circuit.

### Advantageous Effects of Invention

According to an embodiment of the present disclosure, the electricity generated by recovering a magnetic flux leaking from the heating coil can be utilized as power to be supplied to the power receiver placed on the heating zone.

### Brief Description of Drawings

[Fig. 1] Fig. 1 is a perspective view illustrating an external appearance of a heating cooking apparatus according to Embodiment 1.
[Fig. 2] Fig. 2 is a functional block diagram of the heating cooking apparatus according to Embodiment 1.
[Fig. 3] Fig. 3 is another functional block diagram of the heating cooking apparatus according to Embodiment 1.
[Fig. 4] Fig. 4 is a diagram illustrating an example of a circuit configuration of the heating cooking apparatus according to Embodiment 1.
[Fig. 5] Fig. 5 is a diagram illustrating a relationship between a frequency of high-frequency current supplied to a heating cooking apparatus 100 and an output power according to Embodiment 1.
[Fig. 6] Fig. 6 is a control flowchart of the heating cooking apparatus according to Embodiment 1.
[Fig. 7] Fig. 7 is a functional block diagram of a heating cooking apparatus according to Embodiment 2.
[Fig. 8] Fig. 8 is another functional block diagram of the heating cooking apparatus according to Embodiment 2.
[Fig. 9] Fig. 9 is a diagram illustrating an example of a circuit configuration of the heating cooking apparatus according to Embodiment 2.
[Fig. 10] Fig. 10 is a control flowchart of a heating cooking apparatus according to Embodiment 3.
[Fig. 11] Fig. 11 is a diagram illustrating a relationship between a frequency of high-frequency current supplied to a heating cooking apparatus 100 and an output power according to Embodiment 3.
[Fig. 12] Fig. 12 is a functional block diagram of a heating cooking apparatus according to Embodiment 4.
[Fig. 13] Fig. 13 is a functional block diagram of a heating-cooking-apparatus system according to Embodiment 5.
[Fig. 14] Fig. 14 is a functional block diagram of a heating cooking apparatus according to Embodiment 6.

### Description of Embodiments

Embodiments of a heating cooking apparatus according to the present disclosure will be described below with reference to the drawings. The following embodiments are illustrative and various modifications of the features illustrated in the embodiments are conceivable without departing from the scope of the present disclosure. In addition, a configuration of one embodiment may be combined with a configuration of another embodiment. Furthermore, although terms indicating directions (such as "top", "bottom", "right", "left", "front", and "rear") are used in the description below, as appropriate, to facilitate understanding, these terms are used only for the explanation purpose and do not limit the present disclosure. In the drawings, components denoted by the same reference signs are the same or corresponding components, and the reference signs are common in the entire description. Note that, in each of the drawings, the relative dimensional relationship among the components and shapes of the components may differ from the actual dimensional relationship and shapes.

### Embodiment 1

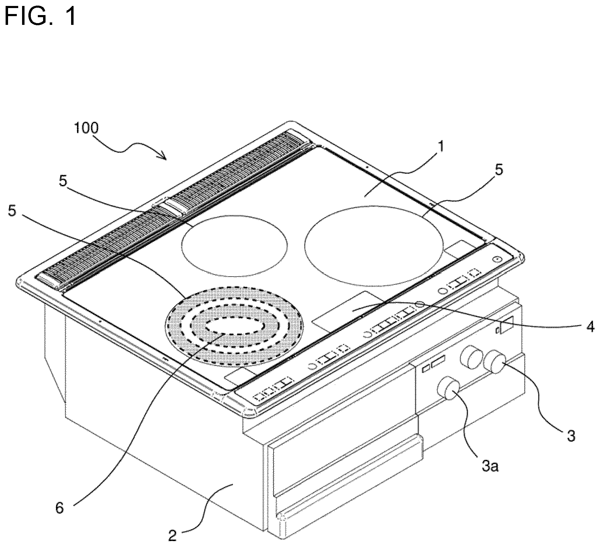

Fig. 1 is a perspective view illustrating an external appearance of a heating cooking apparatus 100 according to Embodiment 1. The heating cooking apparatus 100 includes a top plate 1 on which a heating target, such as a pan, is placed, and a casing 2 provided under the top plate 1. The casing 2 is provided with an operation unit 3 having a button or switch that accepts an operational input from a user. In addition, the heating cooking apparatus 100 is provided with a display unit 4 that displays an operation state of the heating cooking apparatus 100 and content of an operational input made by a user.

Furthermore, the operation unit 3 of Embodiment 1 includes a first operation unit 3a configured to specify whether to operate in an induction heating mode or a power supply mode, which will be described later. As the first operation unit 3a, an input device that specifies execution of operation in the induction heating mode and an input device that specifies execution of operation in the power supply mode may be provided, or a switching device that alternatively selects the induction heating mode and the power supply mode may be provided. Note that specific structures of the operation unit 3 and the display unit 4 are not limited to the structures shown in the drawings.

The top plate 1 has three heating zones 5. A heating zone 5 is an area on which a heating target, such as a pan, is placed. Each heating zone 5 is indicated by printing on the top plate 1. For an illustrative purpose, a heating coil 6 provided in one heating zone 5 is indicated by broken lines in Fig. 1. All or some of the three heating zones 5 each may be provided with a heating coil 6, which will be described later.

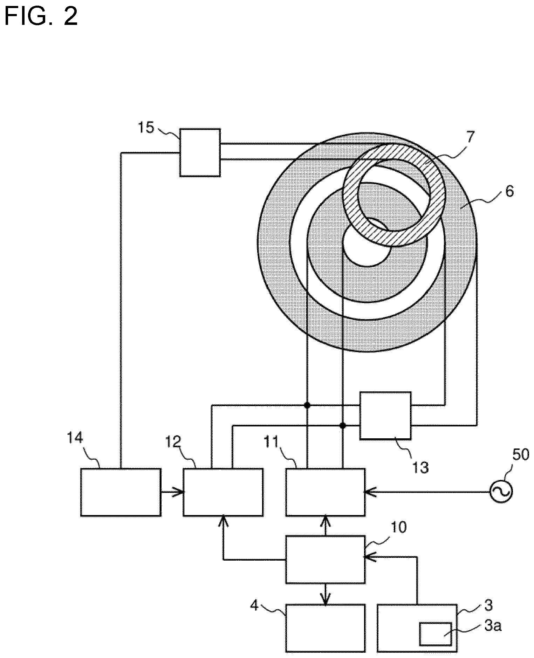

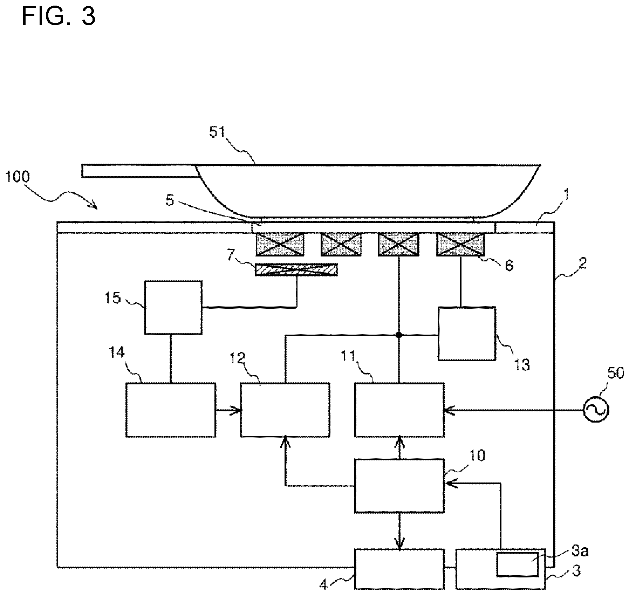

Fig. 2 is a functional block diagram of the heating cooking apparatus 100 according to Embodiment 1. Fig. 2 also shows a planar positional relationship between the heating coil 6 and an electricity-recovery coil 7. Fig. 3 is another functional block diagram of the heating cooking apparatus 100 according to Embodiment 1. Fig. 3 also shows a vertical positional relationship between the heating coil 6 and the electricity-recovery coil 7, together with a heating target 51. In addition, Figs. 2 and 3 also show a commercial electricity source 50. Figs. 2 and 3 show only a configuration including one of the three heating zones 5 of the heating cooking apparatus 100 shown in Fig. 1.

The heating cooking apparatus 100 includes the heating coil 6, the electricity-recovery coil 7, a controller 10, a first driving circuit 11, a second driving circuit 12, and a storage battery 14. The heating cooking apparatus 100 of Embodiment 1 further includes an inductance change unit 13 configured to change an inductance value of the heating coil 6.

The heating coil 6 is formed by winding conductive wire into a ring shape. In Embodiment 1, one heating coil 6 is provided for each heating zone 5. The heating coil 6 is used for inductively heating a heating target 51 placed on the heating zone 5 and for supplying power to a power receiver placed on the heating zone 5.

The electricity-recovery coil 7 is formed by winding conductive wire into a ring shape. Note that the shape of the electricity-recovery coil 7 is not limited to a ring shape. The electricity-recovery coil 7 is disposed at such a position as to interlink with a magnetic flux generated by the heating coil 6. The electricity-recovery coil 7 of Embodiment 1 is disposed at a position overlapping the heating coil 6 as shown in a plane in Fig. 2. The electricity-recovery coil 7 of Embodiment 1 is also disposed under the electricity-recovery coil 7 as shown in Fig. 3.

The electricity-recovery coil 7 is connected to the storage battery 14 via a rectifier circuit 15. The rectifier circuit 15 is configured to convert an alternating-current (AC) voltage generated by the electricity-recovery coil 7 into a direct-current (DC) voltage, and to smooth the voltage. The rectifier circuit 15 includes, for example, a rectifier diode and a smoothing capacitor. Although it is preferred that a DC voltage that is completely smoothed by the rectifier circuit 15 be input to the storage battery 14, a DC voltage on which ripples are superimposed may be applied to the storage battery 14.

The storage battery 14 is configured to store electricity that has been smoothed by the rectifier circuit 15. The storage battery 14 is, for example, a secondary battery, such as a lithium battery.

The controller 10 is configured to control the first driving circuit 11, the second driving circuit 12, the inductance change unit 13, and the display unit 4 in accordance with operation signals input from the operation unit 3. The controller 10 is dedicated hardware or a central processing unit (CPU) configured to execute a program stored in a memory. When the controller 10 is the CPU, each function executed by the controller 10 is achieved by software, firmware, or a combination of software and firmware. The software or the firmware is described as a program and is stored in a memory. The CPU is configured to read out and execute the program stored in the memory, to thereby achieve each function of the controller 10. Here, the memory is, for example, a random access memory (RAM), a read-only memory (ROM), a flash memory, an erasable programmable read-only memory (EPROM), an electronically erasable programmable read-only memory (EEPROM), or other types of non-volatile or volatile semiconductor memory.

The first driving circuit 11 is an inverter circuit that converts an AC input from the commercial electricity source 50 into high-frequency current and outputs the high-frequency current. The high-frequency current output by the first driving circuit 11 is supplied to the heating coil 6.

The second driving circuit 12 is an inverter circuit that converts a DC input from the storage battery 14 into high-frequency current and outputs the high-frequency current. The high-frequency current output by the second driving circuit 12 is supplied to the heating coil 6.

The inductance change unit 13 is configured to switch an inductance value of the heating coil 6 between a first value and a second value, which is smaller than the first value. A specific example of the configuration of the inductance change unit 13 will be described later.

Next, an operation summary of the heating cooking apparatus 100 of Embodiment 1 will be described. The controller 10 of the heating cooking apparatus 100 of Embodiment 1 has two control modes: induction heating mode and power supply mode. The induction heating mode is a control mode for inductively heating a heating target 51, such as a pan, placed on the heating zone 5. The power supply mode is a control mode for supplying power to a power receiver placed on the heating zone 5 in a non-contact power supply.

When operation is executed in the induction heating mode, a heating target 51, such as a pan, is placed on the heating zone 5. In the induction heating mode, when high-frequency current is supplied to the heating coil 6, a magnetic flux is generated by the heating coil 6 and eddy currents are generated in the heating target 51, which is placed on the heating zone 5 and is interlinked with the magnetic flux. The heating target 51 is heated by Joule heat generated by the eddy currents. The heating target 51 placed on the heating zone 5 is inductively heated in this manner. In the induction heating mode, electricity supplied by the commercial electricity source 50 is supplied to the heating coil 6 via the first driving circuit 11.

A part of the magnetic flux generated by the heating coil 6 is interlinked with the electricity-recovery coil 7. When the magnetic flux is interlinked with the electricity-recovery coil 7, an electromotive force is generated in the electricity-recovery coil 7 in a direction that cancels change of the magnetic flux, and thus a current flows in the electricity-recovery coil 7. The electromotive force generated in the electricity-recovery coil 7 is rectified by the rectifier circuit 15 and then is used to charge the storage battery 14. As described above, in the induction heating mode, the storage battery 14 is charged while the heating target 51 is inductively heated.

When operation is executed in the power supply mode, a power receiver is placed on the heating zone 5. The power receiver is a device that includes a power-receiving coil and uses, as power, current flowing in the power-receiving coil. In the power supply mode, when high-frequency current is supplied to the heating coil 6, a magnetic flux is generated by the heating coil 6. Electromagnetic induction is caused by the generated magnetic flux and thus electromotive force is generated in the power-receiving coil of the power receiver. The high-frequency current flowing in the power-receiving coil of the power receiver is used in the power receiver. In the power supply mode, electricity supplied by the storage battery 14 is supplied to the heating coil 6 via the second driving circuit 12.

The heating coil 6 provided in the heating zone 5 is used in both the induction heating mode and power supply mode. The heating zone 5 is an area on which a heating target to be inductively heated is placed, as well as an area on which a power receiver is placed. This configuration is highly convenient for a user because the user can place a heating target or a power receiver on the same area without any confusion.

As described above, the heating cooking apparatus 100 of Embodiment 1 has the induction heating mode and the power supply mode. The heating cooking apparatus 100 charges the storage battery 14 in the induction heating mode and supplies power to a power receiver by use of the storage battery 14 in the power supply mode. Thus, according to Embodiment 1, a leakage magnetic flux generated in the induction heating mode can be effectively utilized in power supply to the power receiver. Because power supply to the power receiver can be performed by no use of an output of the commercial electricity source 50, energy saving can be facilitated. In addition, because the storage battery 14 is charged while heating cooking is performed in the induction heating mode of the heating cooking apparatus 100, an operation for charging the storage battery 14 is not required for a user, thereby saving user's labor for charging. Furthermore, because the heating cooking apparatus 100 of Embodiment 1 includes the storage battery 14, power can be supplied to a power receiver even when electricity supply from the commercial electricity source 50 is lost because of, for example, electricity outage caused by a disaster. Thus, convenience can be improved for the user.

For example, when a power receiver is a smart phone and the smart phone is charged in the power supply mode, the allowable receiving power is estimated to be about 10 watts (W). Therefore, even when an output voltage of the storage battery 14 is smaller than that of the commercial electricity source 50 because of the upper limit of a charge capacity of the storage battery 14, electricity obtained from a leakage magnetic flux can be fully utilized in power supply to the power receiver.

In this case, for the heating coil 6, which inductively heats the heating target 51 placed on the heating zone 5 on a one-to-one basis as described in Embodiment 1, an inductance value that achieves a high output for induction heating is required to improve convenience in cooking. An output required for induction heating cooking is about 100 to 3,000 W When the heating coil 6 having a large inductance value that achieves such a high output is used in the power supply mode, the inductance value of the heating coil 6 may be too large for some power receivers. That is, the output may be too large in some cases. To overcome this problem, the inductance change unit 13 configured to change an inductance value of the heating coil 6 is provided in Embodiment 1.

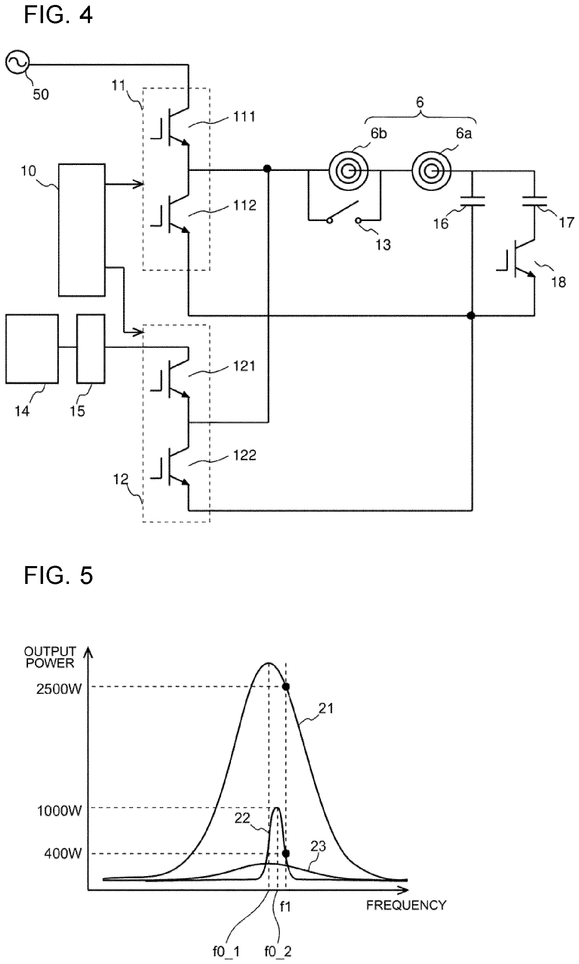

Fig. 4 is a diagram illustrating an example of a circuit configuration of the heating cooking apparatus 100 according to Embodiment 1. The first driving circuit 11 shown in Fig. 4 is a half-bridge type inverter having a switching element 111 and a switching element 112. The switching element 111 and the switching element 112 are connected in series between a power-source line, which is connected to the commercial electricity source 50, and a ground (GND) line. An output point of the first driving circuit 11 is present between the switching element 111 and the switching element 112. The output point of the first driving circuit 11 is connected to the heating coil 6.

The second driving circuit 12 shown in Fig. 4 is a half-bridge type inverter having a switching element 121 and a switching element 122. The switching element 121 and the switching element 122 are connected in series between a power-source line, which is connected to the storage battery 14 and the rectifier circuit 15, and a GND line. An output point of the second driving circuit 12 is present between the switching element 121 and the switching element 122. The output point of the second driving circuit 12 is connected to the heating coil 6.

Note that although a case in which the first driving circuit 11 and the second driving circuit 12 are half-bridge type inverters is described here as an example, specific structures of the inverter circuits are not limited to the exemplified structures.

In Embodiment 1, the controller 10 is configured to exclusively operate either the first driving circuit 11 or the second driving circuit 12 at a time. When operating the first driving circuit 11, the controller 10 alternatively turns on the switching element 111 and the switching element 112. When operating the second driving circuit 12, the controller 10 alternatively turns on the switching element 121 and the switching element 122.

The inductance change unit 13 of Embodiment 1 is a switch that is connected in parallel to a part of the conductive wire forming the heating coil 6. The heating coil 6 is formed by winding conductive wire into a ring shape, as described above, and the switch, which is the inductance change unit 13, is connected in parallel to a part of this conductive wire wound in a ring shape. One part of the heating coil 6 to which the inductance change unit 13 is not connected in parallel is referred to as a first part 6a and the other part of the heating coil 6 to which the inductance change unit 13 is connected in parallel is referred to as a second part 6b. The first part 6a and the inductance change unit 13 are connected in series. In Embodiment 1, the first part 6a is disposed at a center part of the heating zone 5 and the second part 6b is disposed outside an outer periphery of the first part 6a. The inductance of an electric wire connecting the switch formed as the inductance change unit 13 and the second part 6b is smaller than the inductance of the second part 6b.

The inductance change unit 13 of Embodiment 1 forms a bypass path for causing the supplied high-frequency current to bypass the second part 6b and to flow into the first part 6a. When the switch of the inductance change unit 13 is turned on, the high-frequency current flows through a current path formed by the switch, which is in the on state. Thus, no or almost no high-frequency current flows through the second part 6b. When the switch of the inductance change unit 13 is in the on state, the number of turns of the heating coil 6 is substantially equal to the number of turns of the first part 6a. When the switch of the inductance change unit 13 is in the off state, the number of turns of the heating coil 6 is equal to the sum of the number of turns of the first part 6a and the number of turns of second part 6b. In this manner, the inductance change unit 13 of Embodiment 1 changes the inductance value of the heating coil 6 by changing the number of turns of the heating coil 6. The inductance value of the heating coil 6 when the switch of the inductance change unit 13 is in the off state is referred to as a first value. The inductance value of the heating coil 6 when the switch of the inductance change unit 13 is in the on state is referred to as a second value.

A first resonance capacitor 16 is connected in series to the heating coil 6. The heating coil 6 and the first resonance capacitor 16 form a series resonance circuit.

A second resonance capacitor 17 and a switch 18 are connected to the first resonance capacitor 16. A circuit formed by the second resonance capacitor 17 and the switch 18 connected in series is connected to the first resonance capacitor 16 in parallel. When the switch 18 is turned on, the heating coil 6, the first resonance capacitor 16, and the second resonance capacitor 17 form a series resonance circuit. When the switch 18 is turned off, the heating coil 6 and the first resonance capacitor 16 form a resonance circuit. That is, by switching between the on state and the off state of the switch 18, a capacity of the resonance capacitor of the resonance circuit can be changed.

Note that although the switch 18 is illustrated as a semiconductor-type switch in Fig. 4, the switch 18 may be a mechanical switch. In addition, the switch 18 is switched between the on state and the off state by the controller 10.

Fig. 5 is a diagram illustrating a relationship between a frequency of high-frequency current supplied to the heating cooking apparatus 100 and an output power according to Embodiment 1. The horizontal axis in Fig. 5 represents a frequency of high-frequency current supplied to the heating coil 6. The frequency of the high-frequency current is a switching frequency of the switching elements of the first driving circuit 11 or the second driving circuit 12. The vertical axis in Fig. 5 represents a power output by the heating coil 6, that is, a power applied to the heating zone 5. Fig. 5 indicates that an output power of the heating coil 6 varies depending on the frequency of the high-frequency current supplied to the heating coil 6.

In Fig. 5, a property 21 represents a resonance characteristic of the resonance circuit formed by the heating coil 6 and the first resonance capacitor 16 in the induction heating mode. The frequency at the highest point of the property 21 is a resonance frequency f0_1. In general, a resonance frequency f0 of a resonance circuit is represented as f0 = 1/2π√(L value × C value). The L value is a self-inductance value of a coil in resonance circuit and the C value is a capacitance value of a capacitor. As the frequency of high-frequency current supplied to the heating coil 6 approaches the resonance frequency, the impedance decreases and thus the output power increases. Note that when a heating target 51 is made of a magnetic material, the resonance frequency f0 is set to about 17 kHz.

In Embodiment 1, the frequency of the high-frequency current is controlled in a region higher than the resonance frequency f0_1. The property 21 shown in Fig. 5 indicates that a power of 2,500 W is applied to a heating target on the heating zone 5 at a frequency f1. The power to be applied to the heating target on the heating zone 5 can be reduced by making the frequency larger than the frequency f1. The power to be applied to the heating target on the heating zone 5 can be increased by making the frequency smaller than the frequency f1. Therefore, the controller 10 controls the driving frequency of the first driving circuit 11 to adjust the output power. The driving frequency of the first driving circuit 11 is controlled within a range of roughly 17 to 100 kHz.

In the induction heating mode, the inductance of the heating coil 6 is set to the first value by the inductance change unit 13, and the second resonance capacitor 17 is separated from the heating coil 6 by turning off the switch 18. Then, high-frequency current is supplied to the heating coil 6 from the first driving circuit 11, which receives electricity supplied by the commercial electricity source 50. The maximum possible value of a bus voltage of the first driving circuit 11 is about 282 V = 200 V × √/2.

Next, a property 22 in the power supply mode will be described. In the power supply mode, high-frequency current is supplied to the heating coil 6 from the second driving circuit 12 by use of an output from the storage battery 14, as described above.

In this case, the storage battery 14 has an output voltage of about DC 24 to 96 V. On the other hand, the maximum possible value of the bus voltage of the first driving circuit 11 is about 282 V, as described above. A case in which the heating coil 6 is connected to the first driving circuit 11 and a case in which the heating coil 6 is connected to the second driving circuit 12 are considered below. When high-frequency current is supplied from the second driving circuit 12, whose bus voltage is lower than that of the first driving circuit 11, to the resonance circuit formed by the heating coil 6 and the first resonance capacitor 16, its resonance characteristic can be represented by a property 23 of Fig. 5.

The property 23 is expressed as a quality (Q) factor value: Q = (1/R) √/(L/C), where R is a resistance value, L is an inductance value, and C is a capacitance value. When high-frequency current is supplied to the heating coil 6 from the second driving circuit 12, the Q value representing "sharpness of resonance" is not changed in a case in which a resistance value and an inductance value of the heating coil 6, and a capacitance value of a resonance capacitor are the same values as those in the operation of the first driving circuit 11. However, because of a difference in bus voltage, the amplitude in the vertical axis direction of power value shown in Fig. 5 is changed. As a result, as shown by the property 23 of Fig. 5, the output power at the resonance frequency f0_1 is reduced. With the property 23 shown in Fig. 5, it is difficult to apply a power of 500 W to a power receiver.

To solve this problem, in the power supply mode of Embodiment 1, the inductance value of the heating coil 6 is changed to the second value by the inductance change unit 13 as well as the sum of the capacity of the first resonance capacitor 16 and the capacity of the second resonance capacitor 17 is used as the capacitance value of the resonance circuit of the heating coil 6. Consequently, the property 22 is obtained.

By changing the inductance value of the heating coil 6 to the second value, which is smaller than the first value, to increase the capacitance value of the resonance circuit of the heating coil 6, the R value and L value in Q = (1/R)√(L/C) are reduced and thus the C value is increased. In Embodiment 1, turning on the switch of the inductance change unit 13 has the same effect as reducing the number of turns of the conductive wire forming the heating coil 6. By reducing the number of turns of the heating coil 6, the rate of decrease in the resistance value R increases and also the Q value, which is the sharpness of resonance, increases because a square root of L/C is extracted. As a result, the property 22 shown in Fig. 5 can be obtained. A frequency f0_2 shown in Fig. 5 is a resonance frequency of the property 22. As can be seen from the comparison between the property 22 and the property 23 shown in Fig. 5, a higher output power can be obtained for the property 22 with a power supply from the storage battery 14, compared with the property 23.

In the power supply mode, the frequency of high-frequency current is controlled in a region higher than the resonance frequency f0_2. Fig. 5 indicates that the output power of the property 22 is 400 W at the frequency f1. Depending on the power required for a power receiver, the frequency of the high-frequency current supplied to the heating coil 6 is controlled. The property 22 shown in Fig. 5 has a peak output power when high-frequency current is supplied at the resonance frequency f0_2, and an output power of about 1,000 W can be obtained.

Furthermore, it is preferred that the resonance frequency f0_2 of the property 22 and the resonance frequency f0_1 of the property 21 be close to each other. That is, the first value and the second value for the inductance value of the heating coil 6 and the capacitance value of the first resonance capacitor 16 and that of the second resonance capacitor 17 are preferably set such that a relationship is obtained that f0_1 approximately equals to f0_2. For example, the first part 6a and the second part 6b of the heating coil 6 are set to the same inductance value, and the first resonance capacitor 16 and the second resonance capacitor 17 are set to the same capacitance value. As the result, a relationship is obtained that f0_1 approximately equals to f0_2. With this setting, a range of the driving frequency of the first driving circuit 11 in the induction heating mode and a range of the driving frequency of the second driving circuit 12 in the power supply mode can be set to a range of 20 to 100 kHz, which can be used for induction heating. As described above, by setting the same driving frequency range for the first driving circuit 11 and the second driving circuit 12, the same type of element can be used in the first driving circuit 11 and the second driving circuit 12. Therefore, an increase in the number of types of component elements used in the heating cooking apparatus 100 is avoided, and thus manufacturing cost of the heating cooking apparatus 100 can be reduced.

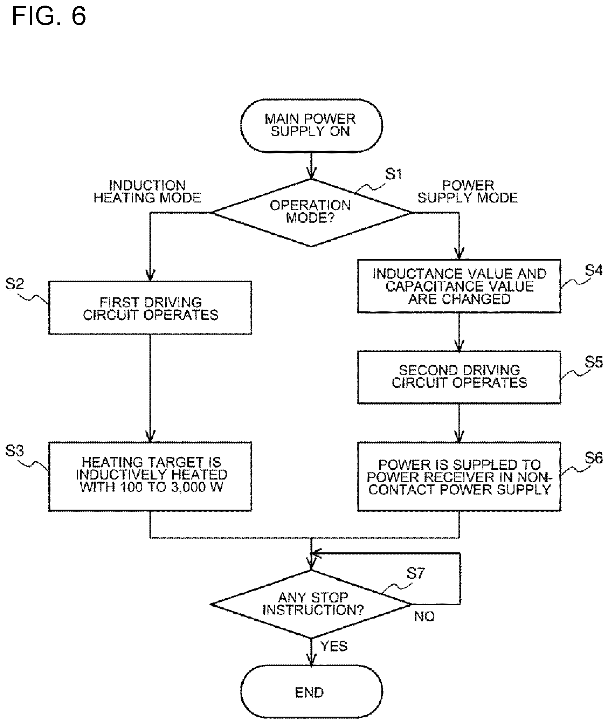

Fig. 6 is a control flowchart of the heating cooking apparatus 100 according to Embodiment 1. Fig. 6 illustrates an example of the control flowchart of Embodiment 1, including processing related to the change of the inductance value and the capacitance value described above.

When a main power of the heating cooking apparatus 100 is turned on, the control flow shown in Fig. 6 starts. In the initial state, the inductance change unit 13 sets the inductance value of the heating coil 6 to the first value, and the switch 18 is in the off state.

In step S1, an operation mode is determined. The operation mode is determined in accordance with, for example, the operation of a user made by use of the first operation unit 3a provided in the operation unit 3. More specifically, either of the induction heating mode or the power supply mode is selected in accordance with the operation of a user made to the first operation unit 3a, then an operation signal corresponding to the selected mode is input to the controller 10 from the first operation unit 3a, and the operation mode corresponding to the operation signal is determined. Note that, in Embodiment 1, although an operation mode is determined in accordance with an operation signal from the first operation unit 3a, the operation mode may be determined on the basis of a determination whether a heating target 51 or a power receiver is placed on the top plate 1 performed by the controller 10 by use of known determination circuitry, in place of or in addition to the operation signal from the first operation unit 3a.

When the induction heating mode is determined as the operation mode in step S1, the first driving circuit 11 is operated in step S2. As described above, electricity is supplied to the first driving circuit 11 by the commercial electricity source 50. When the first driving circuit 11 is operated, high-frequency current is supplied to the heating coil 6 to inductively heat the heating target with an output power of 100 to 3,000 W in step S3. At this time, the property 21 shown in Fig. 5 is obtained, and the frequency of the high-frequency current is controlled in a range of the resonance frequency f0_1 or higher. Thus, the power corresponding to the frequency is applied to the heating target. The induction heating mode is continued until a stop instruction is input to the operation unit 3 in step S7 (YES in step S7).

When the power supply mode is determined in step S1, the inductance value and the capacitance value are changed in step S4. More specifically, the inductance change unit 13 changes the inductance value of the heating coil 6 to the second value, which is smaller than the first value. In addition, the switch 18 is turned on, and the capacitance value of the resonance circuit of the heating coil 6 becomes the sum of the capacity of the first resonance capacitor 16 and the capacity of the second resonance capacitor 17 shown in Fig. 4.

Then, in step S5, the second driving circuit 12 is operated. Electricity is supplied to the second driving circuit 12 by the storage battery 14, as described above. When the second driving circuit 12 is operated, high-frequency current is supplied to the heating coil 6 to supply power to a power receiver in a non-contact power supply in step S6. At this time, the property 22 shown in Fig. 5 is obtained, and the frequency of the high-frequency current is controlled in a range of the resonance frequency f0_2 or higher. Thus, the power corresponding to the frequency is applied to the power receiver. The power supply mode is continued until a stop instruction is input to the operation unit 3 in step S7 (YES in step S7).

As described above, the heating cooking apparatus 100 of Embodiment 1 includes the inductance change unit 13 configured to change the inductance value of the heating coil 6. When high-frequency current is supplied to the heating coil 6 from the first driving circuit 11, the inductance change unit 13 sets the inductance value of the heating coil 6 to the first value. When high-frequency current is supplied to the heating coil 6 from the second driving circuit 12, the inductance change unit 13 sets the inductance value of the heating coil 6 to the second value, which is smaller than the first value. By reducing the inductance value of the heating coil 6, the Q value, that is the sharpness of resonance, of the series resonance circuit of the heating coil 6 is increased. As a result, even when the voltage supplied by the storage battery 14 is low compared with the voltage supplied by the commercial electricity source 50, a desired power corresponding to the frequency of the high-frequency current supplied to the heating coil 6 can be supplied to the heating coil 6.

Furthermore, in Embodiment 1, the capacitance value of the series resonance circuit of the heating coil 6 is large when the inductance value is the second value, compared with that when the inductance value is the first value. Thus, the Q value, that is the sharpness of the resonance, of the series resonance circuit of the heating coil 6 is increased. As a result, even when the voltage supplied by the storage battery 14 is low compared with the voltage supplied by the commercial electricity source 50, a desired power corresponding to the frequency of the high-frequency current supplied to the heating coil 6 can be supplied to the heating coil 6.

Moreover, in Embodiment 1, the number of turns of the heating coil 6 when high-frequency current is supplied to the heating coil 6 from the second driving circuit 12 is smaller than that when high-frequency current is supplied to the heating coil 6 from the first driving circuit 11. Change of the number of turns can be achieved by turning on the inductance change unit 13, which is the switch connected in parallel to the second part 6b of the heating coil 6. By reducing the number of turns of the heating coil 6 when high-frequency current is supplied to the heating coil 6 from the second driving circuit 12, the rate of decrease in the resistance value R of the heating coil 6 increases and the inductance value is reduced. Thus, by reducing the inductance value of the heating coil 6, the Q value, that is the sharpness of the resonance, of the series resonance circuit of the heating coil 6 is increased. As a result, even when the voltage supplied by the storage battery 14 is low compared with the voltage supplied by the commercial electricity source 50, a desired power corresponding to the frequency of the high-frequency current supplied to the heating coil 6 can be supplied to the heating coil 6.

In addition, in Embodiment 1, no high-frequency current is supplied to the heating coil 6 from the first driving circuit 11 in the power supply mode. That is, a high power for inductively heating a heating target 51 is not output while a power receiver is placed on the heating zone 5 of the top plate 1. Thus, a high power, such as a rated output power exceeding, for example, 1,500 W, is never applied to the power receiver, and thereby preventing damage of the power receiver due to the high output application.

### Embodiment 2

In Embodiment 2, an example of the heating cooking apparatus 100 is described that is provided with an electric heater 8 as a heater for heating a heating target 51 on one of the heating zones 5. In Embodiment 2, differences from Embodiment 1 will be mainly described.

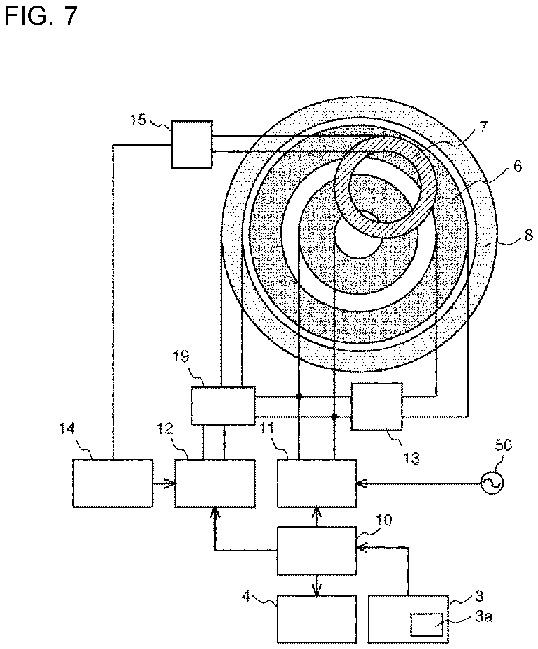

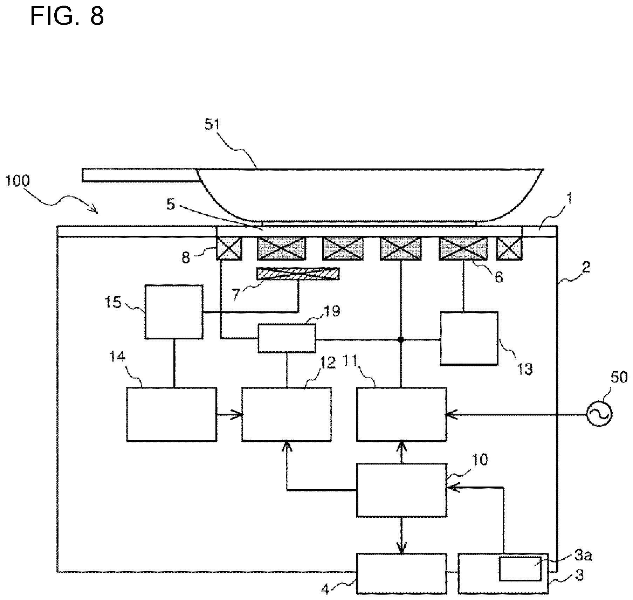

Fig. 7 is a functional block diagram of the heating cooking apparatus 100 according to Embodiment 2. Fig. 7 shows a planar positional relationship between the heating coil 6 and the electric heater 8. Fig. 8 is another functional block diagram of the heating cooking apparatus 100 according to Embodiment 2. Fig. 8 shows a vertical positional relationship between the heating coil 6, the electricity-recovery coil 7, and the electric heater 8, together with a heating target 51.

The heating cooking apparatus 100 of Embodiment 2 includes the electric heater 8, in addition to the heating coil 6, as a heater for heating a heating target 51 on the heating zone 5. The electric heater 8 is, for example, a resistance heating element such as a radiant heater. The electric heater 8 is disposed within the area of the heating zone 5. The electric heater 8 of Embodiment 2 has a ring shape and is disposed outside an outer periphery of the heating coil 6. Note that the arrangement of the electric heater 8 is not limited to that shown in Fig. 7. For example, when the heating coil 6 is formed by winding conductive wire into double-ring shape, the electric heater 8 may be disposed between an inner ring coil and an outer ring coil.

A switching circuit 19 is provided to an output end of the second driving circuit 12. The switching circuit 19 is a circuit having a switch that alternatively selects the heating coil 6 and the electric heater 8 for a supply destination of high-frequency current supplied from the second driving circuit 12. The switching circuit 19 is controlled by the controller 10. In Embodiment 2, electricity that is charged in the storage battery 14 and supplied by the storage battery 14 in the induction heating mode is supplied to either the electric heater 8 or the heating coil 6 via the second driving circuit 12. While the electricity is supplied from the second driving circuit 12 to the electric heater 8, an electrical connection between the second driving circuit 12 and the heating coil 6 is released. While the electricity is supplied from the second driving circuit 12 to the heating coil 6, an electrical connection between the second driving circuit 12 and the electric heater 8 is released.

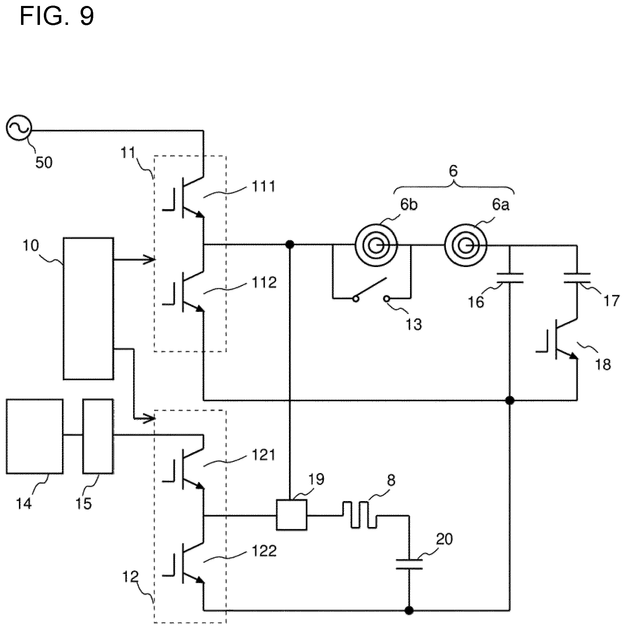

Fig. 9 is a diagram illustrating an example of a circuit configuration of the heating cooking apparatus 100 according to Embodiment 2. The configuration of Fig. 9 is the same as that of Fig. 4 except that the switching circuit 19, the electric heater 8, and a capacitor 20 are connected to the output end of the second driving circuit 12. The capacitor 20 is connected in series to the electric heater 8.

The controller 10 of the heating cooking apparatus 100 of Embodiment 2 has another control mode called a heater heating mode, in addition to the induction heating mode and the power supply mode. The heater heating mode is a control sequence for heating a heating target 51, such as a pan, placed on the heating zone 5 by the electric heater 8. The operation unit 3 of Embodiment 2 is provided with an input device that specifies execution of operation in the heater heating mode.

When operation is executed in the heater heating mode, a heating target 51, such as a pan, is placed on the heating zone 5. The switching circuit 19 connects between the second driving circuit 12 and the electric heater 8. As described in Embodiment 1, because the second driving circuit 12 outputs a high-frequency current of 20 to 100 kHz, an electric heater 9 is also supplied with the high-frequency current. When the high-frequency current is supplied, the electric heater 9 generates heat and thus the heating target 51 on the heating zone 5 is heated. A circuit constant is set such that, when a high-frequency current of 20 to 100 kHz is supplied, the electric heater 9 can output a power of about 300 to 500 W to mainly keep the heating target 51 warm in the heater heating mode.

As described above, the heating cooking apparatus 100 of Embodiment 2 has the induction heating mode and the heater heating mode. The heating cooking apparatus 100 charges the storage battery 14 in the induction heating mode, and supplies power to the electric heater 8 by use of the storage battery 14 in the heat heating mode. Therefore, according to Embodiment 2, a leakage magnetic flux generated in the induction heating mode can be effectively utilized in power supply to the electric heater 8.

Furthermore, according to Embodiment 2, because a heating target 51 can be heated or kept warm in the heater heating mode by no use of the commercial electricity source 50, energy saving can be facilitated.

### Embodiment 3

In Embodiments 1 and 2, electricity supplied by the storage battery 14 is not used in the induction heating mode. In Embodiment 3, a case is described in which electricity supplied by the storage battery 14 is used also in the induction heating mode. In Embodiment 3, differences from Embodiments 1 and 2 will be mainly described.

Embodiment 3 is the same as Embodiments 1 and 2 in that the first driving circuit 11 is not operated in the power supply mode. In addition, the heating cooking apparatus 100 of Embodiment 3 has the induction heating mode described in Embodiments 1 and 2. The heating cooking apparatus 100 of Embodiment 3 further includes a second induction heating mode in which the second driving circuit 12 is operated in addition to the first driving circuit 11 to supply high-frequency current to the heating coil 6.

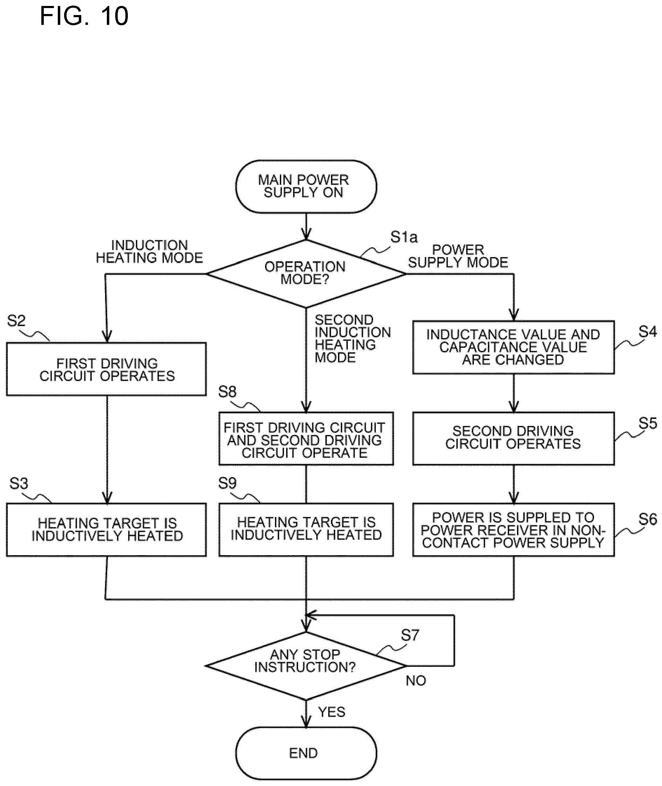

Fig. 10 is a control flowchart of the heating cooking apparatus 100 according to Embodiment 3. The flowchart shown in Fig. 10 is different from the flowchart of Fig. 6 in that step S1a, step S8, and step S9 are added. Differences from Fig. 6 are described below. In the initial state before step S1a of Fig. 10 starts, the inductance change unit 13 sets the inductance value of the heating coil 6 to the first value, and the switch 18 is in the off state. In addition, in Embodiment 3, because the circuit configurations shown in Figs. 4 and 9 are adopted, description will be given with reference to Figs. 4 and 9.

In step S1a, an operation mode is determined. The modes to be selected in step S1a include the second induction heating mode, in addition to the induction heating mode and the power supply mode. The first operation unit 3a of the operation unit 3 of Embodiment 3 is provided with an input device that specifies execution of operation in the second induction heating mode, and the second induction heating mode is selected in accordance with the operation of a user made by use of the first operation unit 3a.

When the second induction heating mode is selected in step S1a, the first driving circuit 11 and the second driving circuit 12 are operated in step S8. When step S8 is being executed, the inductance value of the heating coil 6 is the initial value, that is, the first value. In addition, the switch 18 (see Figs. 4 and 9) is in the off state. The first driving circuit 11 is supplied with electricity from the commercial electricity source 50, and the second driving circuit 12 is supplied with electricity from the storage battery 14. By causing the first driving circuit 11 and the second driving circuit 12 to operate, high-frequency current is supplied to the heating coil 6 and thus the heating target 51 is inductively heated in step S9.

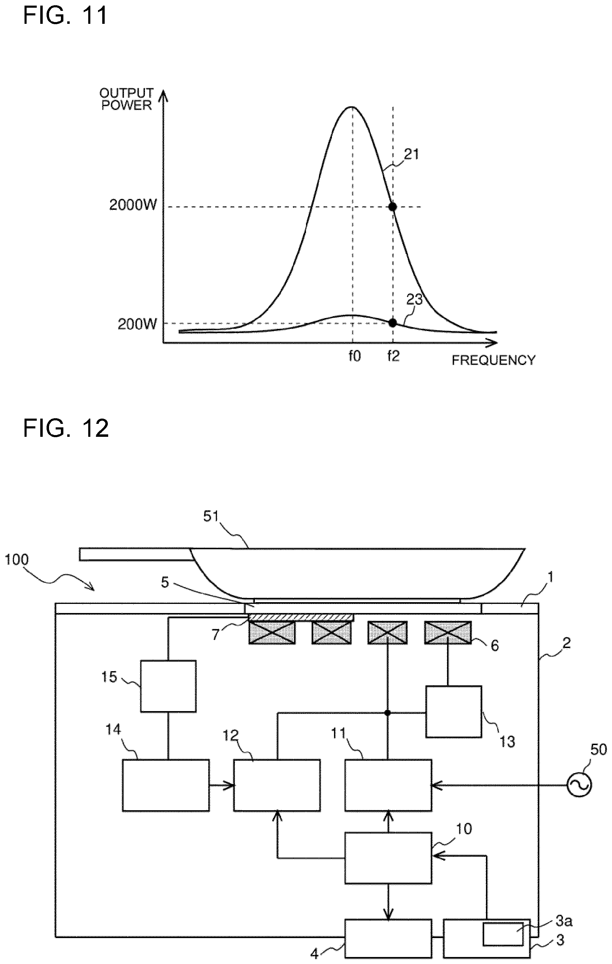

Fig. 11 is a diagram illustrating a relationship between a frequency of high-frequency current supplied to the heating cooking apparatus 100 and an output power according to Embodiment 3. As with the description made with reference to Fig. 5, the property 21 and the property 23 are resonance characteristics of the resonance circuit formed by the heating coil 6 and the first resonance capacitor 16.

The resonance frequency f0 of the resonance circuit formed by the heating coil 6 and the first resonance capacitor 16 is at only one point f0 = 1/(2π√/(L × C)), when seen from the first driving circuit 11 and the second driving circuit 12. That is, the property 21 and the property 23 has the common resonance frequency f0. Note that the L value is the inductance value of the heating coil 6 formed by the first part 6a and the second part 6b, and the C value is the capacitance value of the first resonance capacitor 16. Therefore, one kind of frequency is used for driving signals to be given from the controller 10 to the first driving circuit 11 and the second driving circuit 12.

For example, high-frequency current having a frequency f2 is supplied to the heating coil 6 from the first driving circuit 11 and the second driving circuit 12. With the high-frequency current having the frequency f2, an output power of 2,000 W, for example, as shown by the property 21 can be obtained, and an output power of 200 W, for example, as shown by the property 23 can be also obtained. That is, in this example, an output power of 2,200 W can be obtained in the second induction heating mode. In the second induction heating mode, high-frequency current supplied from the second driving circuit 12, which receives electricity supplied by the storage battery 14, is used to increase the output of the heating coil 6.

As described above, in Embodiment 3, the first driving circuit 11, which receives electricity supplied by the commercial electricity source 50, and the second driving circuit 12, which receives electricity supplied by the storage battery 14, each supply high-frequency current to the heating coil 6 in the second induction heating mode. Thus, induction heating of the heating target 51 can be attained by use of electricity supplied by the storage battery 14 while less electricity supplied by the commercial electricity source 50 is used. Therefore, induction heating can be performed with less power consumption. In addition, the second induction heating mode can be used for peak shaving during use of commercial electricity source 50. For example, the maximum possible power consumption for a time period in which the unit price of the electricity supplied by the commercial electricity source 50 is high is set in advance in the controller 10. When there is a need to perform induction heating with a power output exceeding the maximum possible power consumption, the second induction heating mode is used to utilize electricity from the storage battery 14. More specifically, for example, when the maximum possible power consumption is set to 2,000 W and electricity exceeding 2,000 W is needed, operation in the second induction heating mode is executed so that electricity from the storage battery 14 is utilized.

With this configuration, energy saving can be facilitated.

### Embodiment 4

In Embodiment 4, a modified example of the electricity-recovery coil 7 will be described. Embodiment 4 may be combined with any one of Embodiments 1 to 3.

Fig. 12 is a functional block diagram of a heating cooking apparatus 100 according to Embodiment 4. Fig. 12 shows a vertical positional relationship between the heating coil 6 and the electricity-recovery coil 7, together with a heating target 51. The electricity-recovery coil 7 of Embodiment 4 is a copper foil coil provided on a substrate. The copper foil coil is formed by printing on the substrate. Then, the substrate is pasted on a back surface of the top plate 1. The electricity-recovery coil 7 provided on the substrate is located between the top plate 1 and the heating coil 6. As shown in Fig. 12, the electricity-recovery coil 7 is disposed between the top plate 1 and the heating coil 6 in the vertical direction.

By placing the substrate provided with the electricity-recovery coil 7 on the back surface of the top plate 1, the amount of a magnetic flux interlinked with the electricity-recovery coil 7 can be increased. In some cases, a ferrite core is provided on a back surface of the heating coil 6, that is, a bottom surface of the heating coil 6, to prevent a magnetic flux from leaking into the casing 2. For this reason, when the electricity-recovery coil 7 is disposed on the bottom surface of the heating coil 6 provided with a ferrite core, a part of a leakage magnetic flux generated in the heating coil 6 converges on the ferrite core, and thus the amount of a magnetic flux interlinked with the electricity-recovery coil 7 may be reduced. However, by providing the electricity-recovery coil 7 between the top plate 1 and the heating coil 6, that is on the heating coil 6 as described in Embodiment 4, a rate of electricity recovery can be improved compared with a case in which the electricity-recovery coil 7 is disposed on the bottom surface of the heating coil 6 provided with a ferrite core.

Furthermore, by manufacturing the electricity-recovery coil 7 by printing a copper foil on a substrate as described in Embodiment 4, a manufacturing cost of the electricity-recovery coil 7 can be reduced. In addition, because a space for housing the electricity-recovery coil 7 can be reduced in the casing 2, the size of the casing 2 can be reduced.

### Embodiment 5

In Embodiments 1 to 4, a case is described in which the storage battery 14 is provided in the casing 2. In Embodiment 5, a heating-cooking-apparatus system 101 that includes a storage battery 14A provided outside the casing 2 of a heating cooking apparatus 100A will be described. In Embodiment 5, differences from Embodiments 1 to 4 will be mainly described.

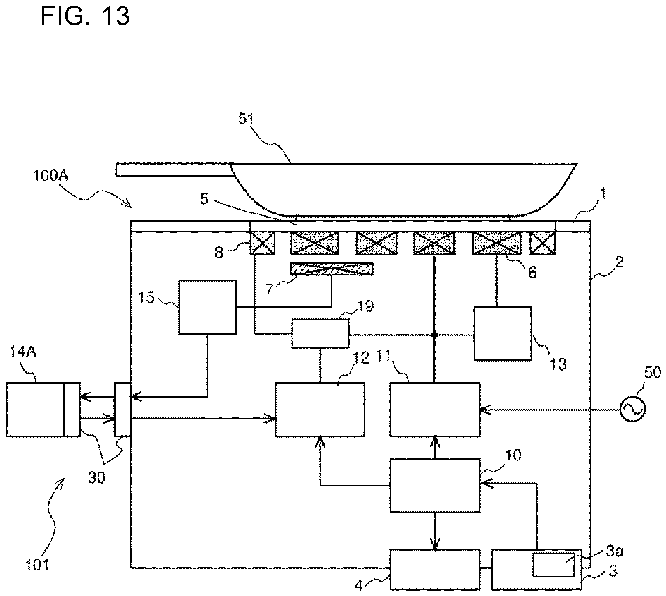

Fig. 13 is a functional block diagram of the heating-cooking-apparatus system 101 according to Embodiment 5. The heating-cooking-apparatus system 101 includes the heating cooking apparatus 100A and the storage battery 14A. The heating cooking apparatus 100A is any one of the heating cooking apparatuses 100 described in Embodiments 1 to 4 but does not include the storage battery 14.

The casing 2 is provided with a supply terminal 30 that connects the rectifier circuit 15 to the storage battery 14A, and connects the second driving circuit 12 to the storage battery 14A. Via the supply terminal 30, an output terminal of the rectifier circuit 15 and an input terminal of the storage battery 14A are connected, and an output from the rectifier circuit 15 is input to the storage battery 14A to charge the storage battery 14A. In addition, via the supply terminal 30, an output terminal of the storage battery 14A and an input terminal of the second driving circuit 12 are connected, and electricity from the storage battery 14A is supplied to the second driving circuit 12.

A feature in which the storage battery 14A is charged while a heating target 51 is inductively heated in the induction heating mode, and the charged power is used in the power supply mode or the second induction heating mode is as described in Embodiments 1 to 3.

As described above, according to Embodiment 5, a leakage magnetic flux generated in the induction heating mode can be effectively utilized in power supply to a power receiver or in inductive heating cooking. Because power supply to a power receiver or inductive heating can be performed by no use of the commercial electricity source 50 or by use of less electricity supplied by the commercial electricity source 50, energy saving can be facilitated. Because the storage battery 14A is charged while heating cooking is performed in the induction heating mode of the heating cooking apparatus 100A, an operation for charging the storage battery 14A is not required for a user, thereby saving user's labor for charging. In addition, because the heating-cooking-apparatus system 101 of Embodiment 5 includes the storage battery 14A, power can be supplied to a power receiver even when electricity supply from the commercial electricity source 50 is lost because of, for example, electricity outage caused by a disaster. Thus, convenience can be improved for the user.

In addition, the heating-cooking-apparatus system 101 of Embodiment 5 includes the storage battery 14A outside the casing 2 of the heating cooking apparatus 100A. By providing the storage battery 14A outside the casing 2, the storage battery 14A having a large charging capacity can be used. Although the storage battery 14A having a large charging capacity is large in size, an increase in size of the casing 2 can be avoided because there is no need to secure a space for housing the storage battery 14A in the casing 2. Furthermore, by use of the storage battery 14A having a large charging capacity, an output voltage of the storage battery 14A can be increased. When the output voltage of the storage battery 14A is increased, a bus voltage of the second driving circuit 12 in increased. Thus, the amplitude in the vertical axis direction of the resonance characteristics shown in Fig. 5 or Fig. 11 is increased. As a result, the output power of the second driving circuit 12 can be increased, and when the second induction heating mode is executed by use of the output from the second driving circuit 12, the power to be applied to the inductive heating can be increased. In addition, by use of the storage battery 14A having a large charging capacity, an output time of electricity from the storage battery 14A can be increased. Because the output time of the electricity from the storage battery 14A is increased, the number of times of supplying power to a power receiver can be increased when the power supply mode is executed by use of the output from the second driving circuit 12. Thus, convenience can be remarkably improved for the user.

### Embodiment 6

In Embodiment 6, a case is described in which the storage battery 14 is charged not only by an output from the electricity-recovery coil 7 but also by an output from the commercial electricity source 50. Embodiment 6 may be combined with any one of Embodiments 1 to 5. Differences from Embodiments 1 to 5 will be mainly described below.

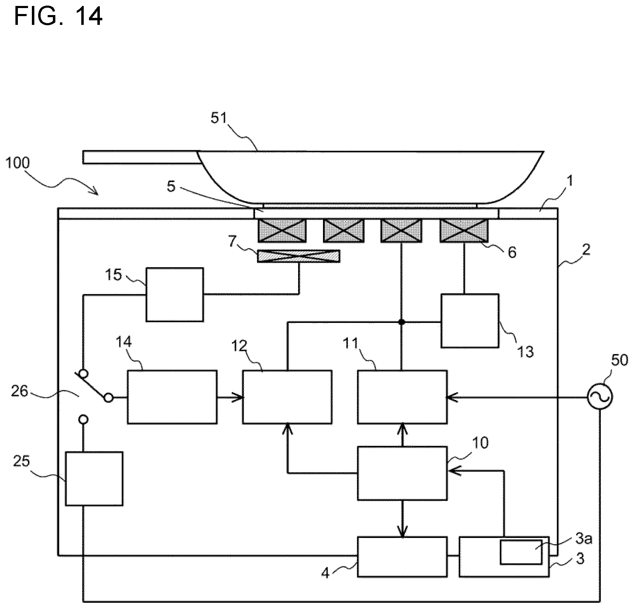

Fig. 14 is a functional block diagram of a heating cooking apparatus 100 according to Embodiment 6. Fig. 14 shows a vertical positional relationship between the heating coil 6 and the electricity-recovery coil 7, together with a heating target 51. In the heating cooking apparatus 100 of Embodiment 6, in addition to the rectifier circuit 15, a step-down rectifier circuit 25 is provided at an input stage of the storage battery 14. A switch 26 is disposed at a position between the rectifier circuit 15 and the storage battery 14 and between the step-down rectifier circuit 25 and the storage battery 14.

The step-down rectifier circuit 25 is configured to convert an AC voltage supplied by the commercial electricity source 50 into a DC voltage, then step down and smooth the DC voltage. The step-down rectifier circuit 25 includes, for example, a rectifier diode, a switch that controls whether or not to output, and a smoothing capacitor. In this case, the storage battery 14 includes a plurality of unit batteries, that is, cells. There are an upper limit and a lower limit for voltage applied to the entire cells. The storage battery 14 cannot be charged when applied with a voltage lower than the lower limit voltage. When applied with a voltage higher than the upper limit voltage, the cells in the storage battery 14 may be deteriorated. The AC voltage supplied by the commercial electricity source 50 is higher than the AC voltage generated by the electricity-recovery coil 7. For this reason, in Embodiment 6, the AC voltage supplied by the commercial electricity source 50 is stepped down by the step-down rectifier circuit 25, and the stepped down voltage is applied to the storage battery 14. The step-down rectifier circuit 25 preferably outputs a voltage that is stepped down to roughly the same voltage as the voltage output from the rectifier circuit 15. Note that although it is preferred that a DC voltage that is completely smoothed by the step-down rectifier circuit 25 be input to the storage battery 14, a DC voltage on which ripples are superimposed may be applied to the storage battery 14.

The switch 26 is configured to selectively connect the input stage of the storage battery 14 to the rectifier circuit 15 or to the step-down rectifier circuit 25. The connection destination of the switch 26 is controlled by the controller 10. The switch 26 may be a mechanical switch or a semiconductor-type switch. When the switch 26 connects the rectifier circuit 15 to the storage battery 14, a first charging path is formed by the electricity-recovery coil 7, the rectifier circuit 15, and the switch 26 for inputting electricity to the storage battery 14. Then, the storage battery 14 is charged by an output from the electricity-recovery coil 7. When the switch 26 connects the step-down rectifier circuit 25 to the storage battery 14, the commercial electricity source 50 is connected to the storage battery 14. Thus, a second charging path is formed by the commercial electricity source 50, the step-down rectifier circuit 25, and the switch 26 for inputting electricity to the storage battery 14. Then, the storage battery 14 is charged by the commercial electricity source 50.

Next, control of the switch 26, that is, control related to charging of the storage battery 14 is described for each mode.

In the power supply mode, the switch 26 connects the storage battery 14 to the step-down rectifier circuit 25, and the storage battery 14 is charged by an output of the commercial electricity source 50. In the power supply mode, a power receiver on the heating zone 5 is charged by an output from the storage battery 14. At the same time, the storage battery 14 is charged by the commercial electricity source 50. Thus, an output time of the electricity from the storage battery 14 can be increased, and the number of times of supplying power to the power receiver and a time for supplying electricity can be increased.

In the induction heating mode, the switch 26 connects the storage battery 14 to the rectifier circuit 15, and the storage battery 14 is charged by an output from the electricity-recovery coil 7. In the induction heating mode, an electromotive force is generated in the electricity-recovery coil 7 by a leakage magnetic flux leaking from the heating coil 6, and the storage battery 14 is charged by the electromotive force. Thus, according to Embodiment 6, a leakage magnetic flux generated in the induction heating mode can be effectively utilized in charging the storage battery 14.

In the heater heating mode described in Embodiment 2, the switch 26 connects the storage battery 14 to the step-down rectifier circuit 25, and the storage battery 14 is charged by an output of the commercial electricity source 50. In the heater heating mode, the electric heater 8 (see Figs. 7 and 8) is supplied with electricity by an output from the storage battery 14. At the same time, the storage battery 14 is charged by the commercial electricity source 50. Therefore, an output time of the electricity from the storage battery 14 can be increased, and thus a time for heating a heating target 51 by the electric heater 8 can be increased.

In the second induction heating mode described in Embodiment 3, the switch 26 connects the storage battery 14 to the rectifier circuit 15, and the storage battery 14 is charged by an output from the electricity-recovery coil 7. In the second induction heating mode, high-frequency current is supplied to the heating coil 6 from the first driving circuit 11 and the second driving circuit 12. At this time, the storage battery 14 is charged by a leakage magnetic flux leaking from the heating coil 6, and the charged storage battery 14 supplies high-frequency electricity to the second driving circuit 12. As a result, a time for supplying high-frequency current to the heating coil 6 from the second driving circuit 12 can be increased. Thus, a time for inductively heating a heating target 51 can be increased by use of electricity supplied by the storage battery 14 while less electricity supplied by the commercial electricity source 50 is used.

Furthermore, in the second induction heating mode, the connection destination of the switch 26 may be changed depending on a remaining charge amount of the storage battery 14. When the remaining charge amount of the storage battery 14 is equal to or greater than a threshold, the switch 26 connects the storage battery 14 to the rectifier circuit 15, and the storage battery 14 is charged by an output from the electricity-recovery coil 7. When the remaining charge amount of the storage battery 14 becomes smaller than the threshold, the switch 26 connects the storage battery 14 to the step-down rectifier circuit 25, and the storage battery 14 is charged by an output from the commercial electricity source 50. Because the storage battery 14 is charged by the commercial electricity source 50 when the remaining charge amount of the storage battery 14 becomes smaller, a time for supplying electricity to the heating coil 6 from the storage battery 14 can be increased.

As described above, the heating cooking apparatus 100 of Embodiment 6 can supply electricity to the storage battery 14 from both the electricity-recovery coil 7 and the commercial electricity source 50. Therefore, after the electricity charged by the output from the electricity-recovery coil 7 is used up, the storage battery 14 can be charged by the commercial electricity source 50. Thus, a time for using the electricity from the storage battery 14 can be increased.

### Reference Signs List

1: top plate, 2: casing, 3: operation unit, 3a: first operation unit, 4: display unit, 5: heating zone, 6: heating coil, 6a: first part, 6b: second part, 7: electricity-recovery coil, 8: electric heater, 9: electric heater, 10: controller, 11: first driving circuit, 12: second driving circuit, 13: inductance change unit, 14: storage battery, 14A: storage battery, 15: rectifier circuit, 16: first resonance capacitor, 17: second resonance capacitor, 18: switch, 19: switching circuit, 20: capacitor, 21: property, 22: property, 23: property, 25: step-down rectifier circuit, 26: switch, 30: supply terminal, 50: commercial electricity source, 51: heating target, 100: heating cooking apparatus, 100A: heating cooking apparatus, 101: heating-cooking-apparatus system, 111: switching element, 112: switching element, 121: switching element, 122: switching element

## Claims

1. A heating cooking apparatus, comprising:
a top plate that has a heating zone that is an area on which a heating target is to be placed;
a heating coil located under the heating zone;
an electricity-recovery coil configured to recover a leakage magnetic flux that leaks from the heating coil and to generate electricity;
a storage battery configured to store the electricity generated by the electricity-recovery coil;
a first driving circuit configured to receive electricity supplied by a commercial electricity source and to supply high-frequency current to the heating coil;
a second driving circuit configured to receive electricity supplied by the storage battery and to supply high-frequency current to the heating coil; and
a controller configured to operate in an induction heating mode to inductively heat the heating target placed on the heating zone by the heating coil supplied with high-frequency current from the first driving circuit, and to operate in a power supply mode to supply power to a power receiver placed on the heating zone by the heating coil supplied with high-frequency current from the second driving circuit.

2. The heating cooking apparatus of claim 1, further comprising
an inductance change unit configured to change an inductance value of the heating coil,
wherein the inductance change unit is configured to set the inductance value of the heating coil to a first value when the heating coil is supplied with high-frequency current from the first driving circuit, and
the inductance change unit is configured to set the inductance value of the heating coil to a second value that is smaller than the first value when the heating coil is supplied with no high-frequency current from the first driving circuit and is supplied with high-frequency current from the second driving circuit.

3. The heating cooking apparatus of claim 1 or 2, wherein the number of turns of the heating coil when the heating coil is supplied with high-frequency current from the second driving circuit is smaller than the number of turns of the heating coil when the heating coil is supplied with high-frequency current from the first driving circuit.

4. The heating cooking apparatus of any one of claims 1 to 3, wherein the heating coil is supplied with no high-frequency current from the first driving circuit in the power supply mode.

5. The heating cooking apparatus of any one of claims 1 to 4, wherein the heating coil is supplied with high-frequency current simultaneously from the first driving circuit and the second driving circuit in the induction heating mode.

6. The heating cooking apparatus of claim 5, wherein a frequency of high-frequency current supplied to the heating coil from the first driving circuit and a frequency of high-frequency current supplied to the heating coil from the second driving circuit are equal to each other in the induction heating mode.

7. The heating cooking apparatus of any one of claims 1 to 6, further comprising
a first operation unit configured to instruct the controller to operate in either the induction heating mode or the power supply mode.

8. The heating cooking apparatus of any one of claims 1 to 7, further comprising:
an electric heater provided under the heating zone and outside an outer periphery or inside an inner periphery of the heating coil; and
a switching circuit configured to connect an output end of the second driving circuit to either the heating coil or the electric heater.

9. The heating cooking apparatus of any one of claims 1 to 8, further comprising a casing that stores the heating coil,
wherein the storage battery is disposed outside the casing.

10. The heating cooking apparatus of any one of claims 1 to 9, wherein
the electricity-recovery coil is a copper foil provided on a substrate, and
the substrate is disposed along the top plate and between the top plate and the heating coil.

11. The heating cooking apparatus of any one of claims 1 to 10, further comprising
a charging path through which electricity is input to the storage battery from the commercial electricity source.

12. A heating-cooking-apparatus system, comprising:
a heating cooking apparatus having
a top plate that has a heating zone that is an area on which a heating target is to be placed,
a heating coil located under the heating zone,
a casing that stores the heating coil, and
an electricity-recovery coil configured to recover a leakage magnetic flux that leaks from the heating coil and to generate electricity; and
a storage battery disposed outside the casing and configured to store the electricity generated by the electricity-recovery coil,
the heating cooking apparatus further having
a first driving circuit configured to receive electricity supplied by a commercial electricity source and to supply high-frequency current to the heating coil,
a second driving circuit configured to receive electricity supplied by the storage battery and to supply high-frequency current to the heating coil, and
a controller configured to operate in an induction heating mode to inductively heat the heating target placed on the heating zone by the heating coil supplied with high-frequency current from the first driving circuit, and to operate in a power supply mode to supply power to a power receiver placed on the heating zone by the heating coil supplied with high-frequency current from the second driving circuit.
